(19) Europäisches Patentamt
European Patent Office
Office européen des brevets

(11) **EP 4 783 061 A1**

(12) **EUROPEAN PATENT APPLICATION**

(43) Date of publication:
**29.07.2026 Bulletin 2026/31**

(21) Application number: **25222323.5**

(22) Date of filing: **10.12.2025**

(51) International Patent Classification (IPC):
**G06F 40/30** (2020.01)     **G06F 40/295** (2020.01)
**G06F 40/216** (2020.01)     **G06F 40/35** (2020.01)
**G08B 21/00** (2006.01)

(52) Cooperative Patent Classification (CPC):
**G06F 40/216; G06F 40/295; G06F 40/30;
G06F 40/35; G08B 21/10; G08B 29/186;
G08B 29/188; G08B 31/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.01.2025 IN 202521005597**

(71) Applicant: **Tata Consultancy Services Limited
Maharashtra (IN)**

(72) Inventors:
• **CHAUDHURI, Ushasi**
  **411057 Pune, Maharashtra (IN)**
• **DESHPANDE, Shailesh Shankar**
  **411028 Pune, Maharashtra (IN)**
• **PAL, Arpan**
  **700091 Kolkata, West Bengal (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR DISASTER EVENT ANALYSIS AND PREDICTION**

(57)     When it comes to disaster event analysis and prediction, one modality of data which is often overlooked in research is news. Current research uses NLP modules to process the news stream, this approach has the disadvantage that the new articles, being from different sources, may have less reliability, and hence the inference and prediction that is generated from this data may not be entirely reliable. In the method and system disclosed herein, for the disaster event analysis and prediction, a first severity information is generated from text input data from various sources, and a second severity information is generated from image data. The first severity information and the second severity information are fused to generate a combined severity information represents a predicted severity of a disaster event, by performing a decision level fusion of the first severity information and the second severity information.

FIG. 2

**Description**

TECHNICAL FIELD

The present application claims priority to Indian application no. 202521005597, filed on January 23, 2025.

CROSS-REFERENCE TO RELATED APPLICATIONS AND PRIORITY

The disclosure herein generally relates to remote sensing, and, more particularly, to a method and system for disaster event analysis and prediction in remote sensing systems.

BACKGROUND

Remote sensing is a critical technology for monitoring natural or anthropogenic disasters. It can help in predicting, monitoring spread of the event, and assessing the damages because of the event. Remote sensing provides synoptic view of the study region in a timely manner which is difficult to get by any other method. For example, flood situations in urban or peri-urban areas can be monitored by remote sensing. Commonly, all the existing platforms are deployed for creating a complete picture in case a hazardous event occurs. This is often referred to as multi-modal remote sensing. This is because all the available remote sensing platforms equipped with different sensing mechanisms such as optical, synthetic aperture radar, LiDAR etc., are deployed. Ideally, each of them provides complementary information about the event and hence is used in a combined manner to provide the complete and more accurate picture than any individual sensor might provide. It is an important step towards situational awareness.

Each of the remote sensing modalities has inherent physical limitation. For example, optical multispectral or hyperspectral data availability might be limited in case of thick cloud cover over the area of interest. The clouds may block the entire image, or it may block some part of the image or especially area of interest within the image. SAR images though capture the data under cloudy conditions, because of side looking geometry and the vertical structure of the city many of the parts of the city may be under the SAR shadow zone and hence invisible. The SAR detection of water bodies in urban area is a nontrivial task as well. SAR does now show the specular reflection signature like the large water bodies in open areas in urban regions. The urban region may be flooded intermittently, or the water bodies appearing in city region would not be continuous like large lakes. Double bounce is one of the important features of SAR images helpful in detecting water. However, increase in double bounce because of flood water is difficult to discriminate over normal double bounce without flood water. Thus, even if multiple modalities are used, and all the remote sensing platforms available, it may still provide an incomplete picture. Overcoming this challenge is critical for effective use of the technology for the end goal - which is monitoring a situation like flood. Generally speaking, remote sensing sources alone might lift the heavy load, however, data from additional sources for creating a better picture during hazardous events (like flood) is desired.

One modality of data which is often overlooked in research is news! News comprises a huge information stream parallelly in addition to earth observation data. News often reports upcoming potential disaster threats, risk-areas, on-going disasters, or updates of an occurred disaster. Further, news also specifies the region of impact. Further, news reported from media houses are not the only sources of news. Social media applications such as Twitter, Facebook, Instagram also report crowd-sourced news, mostly from the impact sites. This constitutes of huge stream of data that can be used for inference. Current research uses NLP modules to process the news stream, this approach has the disadvantage that the new articles, being from different sources, may have less reliability, and hence the inference and prediction that is generated from this data may not be entirely reliable.

SUMMARY

Embodiments of the present disclosure present technological improvements as solutions to one or more of the above-mentioned technical problems recognized by the inventors in conventional systems. For example, in one embodiment, a processor implemented method is provided. The method includes: receiving, via one or more hardware processors, an input text data and associated image data; processing, via the one or more hardware processors, the input text data, comprising: identifying, via a fine-tuned Large Language Model (LLM), one or more disaster related information in the input text data, based on a contextual data extracted from the input text data; classifying, by processing the one or more disaster related information as a multi-class classification problem, via the LLM, the one or more disaster related information as belonging to one or more pre-defined disaster classes; extracting a plurality of named entities from the one or more disaster related information classified as belonging to the one or more pre-defined disaster classes, wherein plurality of named entities comprise a geolocation, a severity, a disaster type, and a timeline; and determining, by processing the extracted plurality of named entities, a first severity information for the disaster event; generating, via the one or more hardware processors, a second severity information of the disaster event, by processing the image data using a fine-tuned Visual Language Model (VLM); and generating, via the one or more hardware processors, a combined severity information for the disaster event, by performing a decision level fusion of the first severity information and the second severity information, wherein the combined severity information represents a predicted severity of the disaster event.

In an aspect of the method, a geospatial disaster map of a geographical area affected by the disaster event is generated by processing the input text data, the associated image data, and the combined severity information, wherein in the geospatial disaster map, an intensity of the disaster event is represented using a tally of distribution function.

In another aspect of the method, a heat-flow map of the geographical area is generated by integrating the combined severity information generated by processing the input text data and the associated image, from a plurality of data sources, over a period of time, and wherein the heat-flow map of the geographical area represents a disaster occurrence probability at the geographical area and a direction of propagation of the disaster event.

In another aspect, a system is provided. The system includes one or more hardware processors, a communication interface, and a memory storing a plurality of instructions. The plurality of instructions cause the one or more hardware processors to: receive an input text data and associated image data; process the input text data, by: identifying, via a trained Large Language Model (LLM), one or more disaster related information in the input text data, based on a contextual data extracted from the input text data; classifying, by processing the one or more disaster related information as a multi-class classification problem, via the LLM, the one or more disaster related information as belonging to one or more pre-defined disaster classes; extracting a plurality of named entities from the one or more disaster related information classified as belonging to the one or more pre-defined disaster classes, wherein plurality of named entities comprise a geolocation, a severity, a disaster type, and a timeline; and determining, by processing the extracted plurality of named entities, a first severity information for the disaster event; generate a second severity information of the disaster event, by processing the image data using a fine-tuned Visual Language Model (VLM); and generate a combined severity information for the disaster event, by performing a decision level fusion of the first severity information and the second severity information, wherein the combined severity information represents a predicted severity of the disaster event.

In an aspect of the system, the one or more hardware processors are configured to generate a geospatial disaster map of a geographical area affected by the disaster event by processing the input text data, the associated image data, and the combined severity information, wherein in the geospatial disaster map, an intensity of the disaster event is represented using a tally of distribution function.

In another aspect of the system, the one or more hardware processors are configured to generate a heat-flow map of the geographical area by integrating the combined severity information generated by processing the input text data and the associated image, from a plurality of data sources, over a period of time, and wherein the heat-flow map of the geographical area represents a disaster occurrence probability at the geographical area.

In yet another aspect, one or more non-transitory computer readable mediums are provided. The one or more non-transitory computer readable medium include a plurality of instructions, which when executed, cause one or more hardware processors to: receive an input text data and associated image data; process the input text data, by: identifying, via a trained Large Language Model (LLM), one or more disaster related information in the input text data, based on a contextual data extracted from the input text data; classifying, by processing the one or more disaster related information as a multi-class classification problem, via the LLM, the one or more disaster related information as belonging to one or more pre-defined disaster classes; extracting a plurality of named entities from the one or more disaster related information classified as belonging to the one or more pre-defined disaster classes, wherein plurality of named entities comprise a geolocation, a severity, a disaster type, and a timeline; and determining, by processing the extracted plurality of named entities, a first severity information for the disaster event; generate a second severity information of the disaster event, by processing the image data using a fine-tuned Visual Language Model (VLM); and generate a combined severity information for the disaster event, by performing a decision level fusion of the first severity information and the second severity information, wherein the combined severity information represents a predicted severity of the disaster event.

In an aspect of the one or more non-transitory computer readable mediums, the one or more hardware processors are configured to generate a geospatial disaster map of a geographical area affected by the disaster event by processing the input text data, the associated image data, and the combined severity information, wherein in the geospatial disaster map, an intensity of the disaster event is represented using a tally of distribution function.

In another aspect of the one or more non-transitory computer readable mediums, the one or more hardware processors are configured to generate a heat-flow map of the geographical area by integrating the combined severity information generated by processing the input text data and the associated image, from a plurality of data sources, over a period of time, and wherein the heat-flow map of the geographical area represents a disaster occurrence probability at the geographical area.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for disaster event analysis and prediction, according to some embodiments of the present disclosure.
FIG. 2 is a flow diagram depicting steps involved in the process of the disaster event analysis and prediction, being done by the system of FIG. 1, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

When it comes to disaster event analysis, one modality of data which is often overlooked in research is news! News comprises a huge information stream parallelly in addition to earth observation data. News often reports upcoming potential disaster threats, risk-areas, on-going disasters, or updates of an occurred disaster. Further, news also specifies the region of impact. Further, news reported from media houses are not the only sources of news. Social media applications such as Twitter, Facebook, Instagram also report crowd-sourced news, mostly from impact sites. This constitutes of huge stream of data that can be used for inference. Current research uses NLP modules to process the news stream, this approach has the disadvantage that the new articles, being from different sources, may have less reliability, and hence the inference and prediction that is generated from this data may not be entirely reliable.

To address these challenges, a method and system for disaster event analysis and prediction are disclosed. In this method, an input text data and associated image data are received. The input text data is then processed, via the following steps. In this process, one or more disaster related information in the input text data are identified, via a trained Large Language Model (LLM), based on a contextual data extracted from the input text data. Further, the one or more disaster related information are classified as belonging to one or more pre-defined disaster classes , by processing the one or more disaster related information as a multi-class classification problem, via the LLM. Further, a plurality of named entities are extracted from the one or more disaster related information classified as belonging to the one or more pre-defined disaster classes. The plurality of named entities comprise a geolocation, a severity, a disaster type, and a timeline. Further, by processing the extracted plurality of named entities, a first severity information is determined for the disaster event. Further, a second severity information of the disaster event is generated severity information by processing the image data using a fine-tuned Visual Language Model (VLM). Further, a combined severity information for the disaster event is generated severity information by performing a decision level fusion of the first severity information and the second severity information, wherein the combined severity information represents a predicted severity of the disaster event.

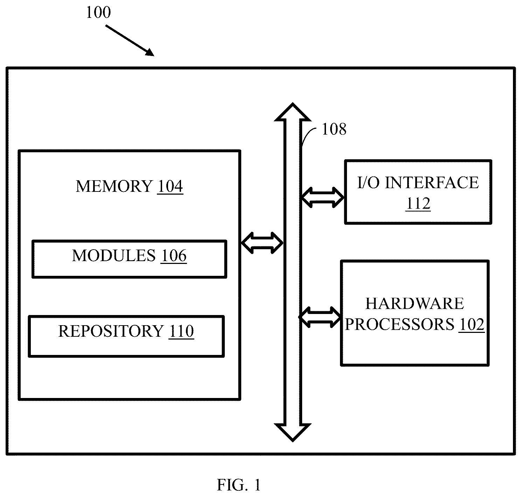

Referring now to the drawings, and more particularly to FIG. 1 through FIG. 2, where similar reference characters denote corresponding features consistently throughout the figures, there are shown preferred embodiments, and these embodiments are described in the context of the following exemplary system and/or method.

FIG. 1 illustrates an exemplary system for disaster event analysis and prediction, according to some embodiments of the present disclosure.

The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of the disaster event analysis and prediction, being performed by the system of FIG. 1. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the disaster event analysis and prediction.

The data repository (or repository) 110 may include a plurality of abstracted piece of code for refinement and data that is processed, received, or generated as a result of the execution of the plurality of modules in the module(s) 106.

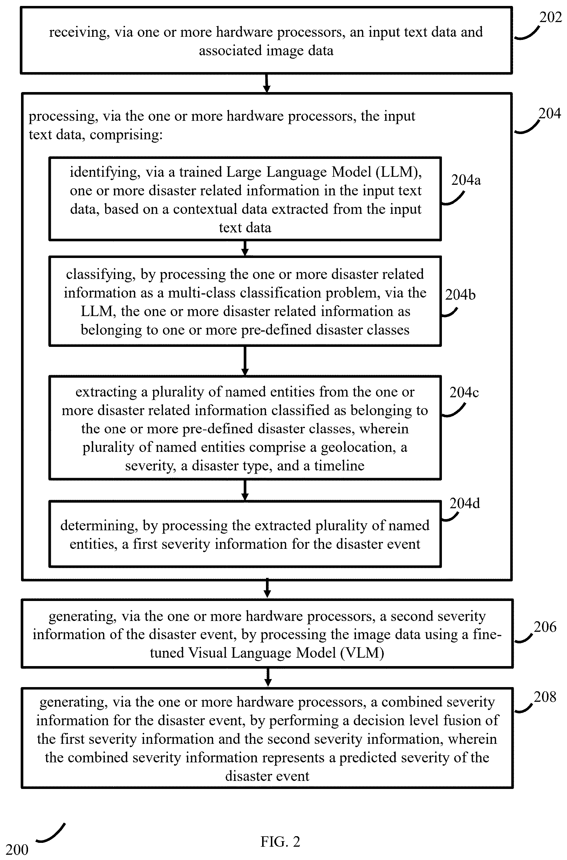

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the flow diagrams in FIG. 2.

FIG. 2 is a flow diagram depicting steps involved in the process of the disaster event analysis and prediction, being done by the system of FIG. 1, according to some embodiments of the present disclosure. In an embodiment, the system 100 comprises one or more data storage devices or the memory 104 operatively coupled to the processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1 and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of method 200, the system 100 receives, via the one or more hardware processors 102, an input text data and associated image data. The input text data and the associated image data are from news articles, social media, or any such sources. In an embodiment, the input text data and the associated image data are fed to the system 100 via one or more suitable interfaces, by an authorized user. In another embodiment, the system 100 may be configured to automatically monitor news and social media data publicly available, using appropriate means.

At step 204 of the method 200, the system 100 processes, via the one or more hardware processors 102, the input text data. Various steps involved in the processing of the input text data are depicted in steps 204a through 204d, which are explained hereafter. At step 204a, the system 100 identifies, via a trained Large Language Model (LLM), one or more disaster related information in the input text data, based on a contextual data extracted from the input text data. For example, the input text data may be a news report on a disaster that has happened, or is about to happen. For example, the news report may be of an earthquake, forest fire, flood, and so on. The LLM in this instance is trained using training data with respect to such different disaster events, which in turn helps the LLM to identify different such disaster events, based on the contextual data. The contextual data that is learnt by the LLM, during the training, facilitates mapping of terms or parameters to related disaster events. For example, if the news report has the term 'Richter scale', the LLM, by virtue of the training, has the contextual knowledge to infer that the news is about a disaster event, and more specifically, about an earthquake event. Similarly, if the news has terms like 'rain', 'millimeter (which is a measure of rainfall)', the LLM may infer that the news report may be associated with the disaster event 'flood'. Such data, and the associated inference, are identified as the disaster related information at the step 204a.

At step 204b of the method 200, the system 100 classifies, by processing the one or more disaster related information as a multi-class classification problem, via the LLM, the one or more disaster related information as belonging to one or more pre-defined disaster classes. The term 'disaster class' refers to different disaster types, for example, earthquakes, floods, forest fire, and so on. The LLM uses the contextual data learnt at step 204a for performing a multi-class classification at the step 204b. At this stage, the LLM generates contextual embeddings from input text data and uses an associated classifier to perform the classification. The classifier maybe represented as: $y=softmax(Wh_{CLS}+b)$, where $y$ gives the individual class probability values, $W$ and $b$ are the learnable weights and biases, and $h_{CLS}$ provides the previous layer class embeddings. The LLM is trained with a categorical cross-entropy loss:

$$L = -\sum_{k=1}^{K} y_k log(Y(pred)_k)$$

, where $y_k$ denotes the class embedding value for the $k^{th}$ instance, $Y(pred)_k$ denotes the LLM's predicted probability distribution. Optimization of this loss helps the LLM to assign higher probabilities to the correct class while reducing the probabilities for incorrect classes, improving the overall accuracy.

Further, at step 204c, the system 100 extracts a plurality of named entities from the one or more disaster related information classified as belonging to the one or more pre-defined disaster classes. Each of the plurality of named entities is a parameter that is used by the system 100 to infer more details about the disaster event. The named entities used by the system 100 are a geolocation, a severity, a disaster type, and a timeline. For example, the news about the earthquake may cover specific details such as place of occurrence (i.e., the geo location), Richter scale value (i.e., the severity), time of occurrence (i.e., the timeline) and so on. The system 100 may use any suitable Natural Language Processing (NLP) technique or components (for example, a falcon 7B conversational agent) to extract one or more of the named entities.

Each of the plurality of named entities is further elaborated below:

• Geo-location: Most of the time the news / news article specifies the exact geo-location of the disaster. However, the given details may not be always sufficient for interpretation. Further, there might be news of multiple areas being struck by a disaster reporting. In such cases the system 100 needs to extract all the geo-locations from the news article. The system 100 is configured to order the extracted geo-location data in a hierarchical form such as (Continent → Country → State → City → Area) for better geo-location understanding. There may be different places in different parts of a country, that have same name. In such situations the hierarchical presentation helps in uniquely determining the location where the disaster struck. The system 100 may use a suitable data source, for example, a Geoapify library that gives features of the location from the location name, to extract the location details that are required to present the geo-location data in the hierarchical form. Features like latitude, longitude, bounding box of the location in terms of two corner's latitude and longitude, may be used to identify the exact geo-location details.

• Disaster type: Some of the common disaster categories are, flood, drought, landslides, earthquakes, cyclones, etc. Some of the disasters are aftereffects of another disaster, like cyclones and tornadoes are mostly accompanied by torrential rainfalls, and effectively leads to flooding. Tsunamis and hurricanes also lead to flooding. Landslides blocking a river catchment area has also led to flooding many a times in the history. Hence, this is a multi-label classification problem.

• Severity: As explained earlier, the earthquakes are reported in Richter scale, flooding is reported by water above sea level, rainfall in cubic centimeters or millimeters, etc. To unify and normalize all these different disaster scales and to provide a rating from mild to extremely severe in terms of stringency and harshness is a regression problem. The severity is quantified into 5 different types, i) mild/gentle ii) below-average iii) average, iv) moderate, and v) extreme. Each of these types is characterized by specific values. For example, the values are defined as follows (Table. 1):

Table. 1

|  | Mild | Below Average | Average | Above average | Extreme |
|---|---|---|---|---|---|
| Flood (Flood magnitude scale) | 0-2 | 3-4 | 5-6 | 7-8 | 9-10 |
| Earthquake (Richter scale) | 1-4 | 5-6 | 7 | 8-9 | 10 |
| Rainfall (mm) | <10 | 10-25 | 25-50 | 50-250 | >250 |
| Air pollution (AQI) | 0-50 | 51-100 | 101-200 | 201-300 | >300 |
| Heatwave (degree Celsius) | 27-31 | 32-26 | 36-40 | 40-56 | >56 |

• Timeline: The time line information helps the system 100 to find the time-frame of the disaster event in terms of: impending, ongoing, or aftermath, in terms of the input text data. An impending disaster news helps in taking necessary actions to minimize loss of resources and relocating live-stocks. Aftermath news of all past disasters can help big insurance companies in demarcating high-risk zones.

The system 100 configures the LLM to extract the information on the different named entities by prompting the LLM using a prompt that is generated using a pre-prompt and data extracted from various sources, for example, the news articles. An example of the pre-prompt that can be used by the system 100 is given below:

"Extracting the following details from a news article about a disaster event:

(continued)

> - Disaster type: The specific type of disaster explained in the news article. The disaster type could be one of: earthquake, flood, cold wave, heat wave, heavy rainfall, flood, wildfire, tsunami, ...."
> - If the news article does not mention a disaster type from the defined list, return "NA"
> - Location: The geo-location where the disaster event occurred. In Continent → Country → State → City → Area format
> - Severity: Severity of the disaster event on a scale of 1 to 5, where 1 represents minimal impact and 5 represents catastrophic impact.
> - Return an ArticleResponse containing details of the disaster(s). if no relevant disaster event is found, return "NA" for disaster type and location

> News Article:
> Wildfires prompt evacuations near San Diego amid relentless Santa Ana winds: In Los Angeles County, firefighters made progress against two deadly wildfires that destroyed over 15,000 structures and killed at least 28 people.

Further, at step 204d, the system 100 determines, by processing the extracted plurality of named entities, a first severity information for the disaster event. At this step, the system 100 determines the severity of the disaster event as one of the i) mild/gentle ii) below-average iii) average, iv) moderate, and v) extreme, based on the input text data and values defined in Table. 1. In an embodiment, the values in Table. 1 can be changed. The determined severity data, i.e., from the input text data, forms the first severity information.

Further, at step 206 of the method 200, the system 100 generates, via the one or more hardware processors 102, a second severity information of the disaster event, by processing the image data using a fine-tuned Visual Language Model (VLM). The fine-tuned Visual Language Model (VLM) is trained on a plurality of images of various disaster events, of various scales/severity, and once trained, is configured to process the image data of the disaster event and accordingly generate the second severity information. The VLM is a fusion of vision and natural language models, which ingests images and their respective textual descriptions as inputs and learns to associate the knowledge from the two modalities. The vision part of the model captures spatial features from the images, while the language model encodes information from the text. The VLM is fine-tuned with some pre-existing news data, which enhances capability of the VLM to generate severity information based on an image that is being processed.

The system 100 uses the VLM under a semi-supervised learning setup, where only a few labeled samples guide an optimization process to label unseen data points. To train the VLM, the VLM is loaded and is trained on specific task at hand using contrastive learning. Contrastive learning is a ranking based loss function that helps to learn the differences and similarities between different instances. In this approach, a similarity score is computed between data instances, by minimizing contrastive loss, provided as:

$$L\left(W, \left(Y, \overrightarrow{X_1}, \overrightarrow{X_2}\right)^i\right) = (1-Y)L_S\left(D_W^i\right) + Y\, L_D\left(D_W^i\right) \qquad \text{--- (1)}$$

where, $Y$ denotes the two textual and visual features ($X_1$ and $X_2$) respectively, are similar ($Y = 0$) or dissimilar ($Y = 1$). $L_S$ is the similarity loss function, which should be applied if the given samples are similar (text and image belongs to the same news article), and $L_D$ is the loss function when the given data points are dissimilar (text and the visual data are from two different news articles). The $D_W$ term is the similarity/dissimilarity/distance between the two transformed data points. While training the contrastive loss provides a pretext encoder which is robust and fine-tunes for the news article image-text pairs. These encoders are then used to learn a downstream task of severity classification. Similar to the first severity information, the second severity information also categorizes the disaster event as one of i) mild/gentle ii) below-average iii) average, iv) moderate, and v) extreme.

Further, at step 208 of the method 200, the system 100 generates, via the one or more hardware processors 102, a combined severity information for the disaster event, by performing a decision level fusion of the first severity information and the second severity information, wherein the combined severity information represents a predicted severity of the disaster event. For the decision level fusion, the system 100 uses a combination of a divide-and-conquer algorithm based 'boosting' technique in conjunction with voting-based algorithm of 'fuzzy rules' technique. The Divide and Conquer algorithm divides main problem into multiple sub-problems and solve them individually to finally merge them up to get a solution to the main problem. "Bagging", which is a divide-and-conquer algorithm, helps improve results generated by the LLM by learning a set of classifiers (experts) and by allowing them to vote to attain a model with higher stability. The voting-based algorithm takes consensus of multiple separate decisions using different problem solvers and then tallies the number of votes cast in support of each decision. The system 100 uses a combination of a divide-and-conquer algorithm based 'bagging' technique in conjunction with voting-based algorithm of 'fuzzy rules' technique.

The fuzzy rules technique is based on the following conditions that are configured with the system 100.

a. if there is only one available data stream, choose the only severity information provided by that stream.
b. If both the modalities (i.e., the text input data and the associated image(s)) are present, and the same severity information is provided for both the modalities, then the same is chosen.
c. In case of absolute disagreement (for example, the severity information based on the text input data is 'extreme', while that is based on the image is 'mild'), then the severity information based on the text input data is selected.
d. If the disagreement is partial (any case other than case a, b, or c), then the system 100 uses a bagging technique, as described below:

Bagging is an ensemble learning technique that helps improve machine learning results by learning a set of classifiers (experts) and to allow them to vote to attain a model with higher stability. So, the confidence scores (Softmax values) of the severity prediction of a VLM classifier head are taken.

a. If the confidence score is significantly high, with reference to a threshold value, (for example, above 80%), label of this confident classifier can be assigned.
b. If the confidence score is significantly low, with reference to a threshold value, (for example, lower than 50%), the severity rating of the other modality is assigned.
c. If the confidence score is intermediate, i.e., between the significantly high value and the significantly low value, either of the severity information, subject to the condition that this decision can be reinforced upon encountering the next news article of that area/geo-location.

The fusion of the severity information from the two modalities, i.e., from the input text data and the image data, acts as a validation of the severity information generated from the different individual modalities, thereby addressing the data reliability issue that exists with the state of the art approaches.

Further, a geospatial disaster map of the geographical area affected by the disaster event is generated by processing the input text data, the associated image data, and the combined severity information. In the geospatial disaster map, an intensity of the disaster event is represented using a tally of distribution function. The process of constructing the geospatial disaster map is explained with reference to a bi-variate Gaussian function. However, this is for example purpose only, and it is to be understood that any other distribution approach other than the bi-variate Gaussian function also may be used.

Based on the input text data, the associated image data, and the combined severity information, the system 100 extracts the exact geo-location of the disaster event, i.e., impact site, and based on the resolution of the mentioned geo-location. A Gaussian, whose spread (standard deviation) is proportional to the resolution of the reported geo-location, is placed. The severity information is used define the height (mean) of the Gaussian. When there are more and more reports coming in from different news articles, more and more such Gaussian heads are placed to generate overall heat map.

A bi-variate Gaussian function is used to approximate the disaster's severity distribution over a specific area. Latitude and longitude serves as two variables defining the major and the minor axis of the gaussian along x and y axis. The severity information serves as an intensity of the probability density function of the Gaussian.

Bounding Box spread calculations: Let the top left and the bottom right corner coordinates be $(x_i, y_i)$ and $(x_j, y_j)$. The extent/spread of the Gaussian distribution is taken as half of the distance between the major and the minor axis as a convenience.

$$\sigma_{lat} = \frac{|x_j - x_i|}{2}, \ \sigma_{lat} = \frac{|y_j - y_i|}{2} \qquad \text{--- (2)}$$

Where $\sigma_{lat}$ and $\sigma_{lon}$ are the standard deviations of the Gaussian distribution in the latitude and longitude directions, respectively. It is known within a Gaussian that $\sigma$ covers 68.3% area under the Gaussian curve. Likewise, $2\sigma$ covers 95.4% and $3\sigma$ covers 99.7% of the area under the Gaussian curve. So the system 1oo is configured to use the $3\sigma$ value of the Gaussian to be equal to the defined spatial extent required to construct the Gaussian. The Gaussian is defined as:

$$f(x, y \mid \mu_{lon}, \mu_{lat}, \sigma_{lon}, \sigma_{lat}) = \frac{1}{2\pi\sigma_{lon}\sigma_{lat}} \cdot \exp\left(-\frac{1}{2}\left(\frac{(x-\mu_{lon})^2}{\sigma_{lon}^2} + \frac{(y-\mu_{lat})^2}{\sigma_{lat}^2}\right)\right)$$

$$\text{--- (3)}$$

where, $\mu_{lon}$ and $\mu_{lat}$ are the center of the Gaussian distribution (the disaster's latitude and longitude). The extracted severity information is used to scale the probability density as every point of the map. Hence the modified disaster distribution becomes:

$$f(x,y) = S \cdot \frac{1}{2\pi\sigma_{lon},\sigma_{lat}} \exp\left(-\frac{1}{2}\left(\frac{(x-\mu_{lon})^2}{\sigma_{lon}^2} + \frac{(y-\mu_{lat})^2}{\sigma_{lat}^2}\right)\right) \quad \text{---} \ (4)$$

where, S is severity of the disaster on a scale of 1-5. However, at this stage the time frame is not covered, and the captured data gives a 2-Dimensional (2D) heat map which demarcates all the high-risk disaster-prone regions. To this the system 100 incorporates the time line information to create a 3D heat-flow map. The heat flow map maybe fused with a more enriched data source from various social media channels. To capture finer spatial and temporal resolution of the geo-location and timeline. In an embodiment, a heat-flow map of the geographical area is generated by integrating the combined severity information generated by processing the input text data and the associated image, from a plurality of data sources, over a period of time. The heat-flow map of the geographical area represents a disaster occurrence probability at the geographical area and a direction of propagation of the disaster event.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of disaster event analysis based on news/social media contents, where reliability of data is less, in turn affecting analysis and prediction results. The embodiment thus provides a mechanism for disaster event analysis by fusing severity information from two different modalities, i.e., text data input and image input, which causes validation of severity information generated individually from these modalities. Moreover, the embodiments herein further provide a mechanism for generating predictions based on the analysis of the disaster event.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1.   A processor implemented method (200), comprising:

   receiving (202), via one or more hardware processors, an input text data and associated image data;
   processing (204), via the one or more hardware processors, the input text data, comprising:

      identifying (204a), via a trained Large Language Model (LLM), one or more disaster related information in the input text data, based on a contextual data extracted from the input text data;
      classifying (204b), by processing the one or more disaster related information as a multi-class classification problem, via the LLM, the one or more disaster related information as belonging to one or more pre-defined disaster classes;
      extracting (204c) a plurality of named entities from the one or more disaster related information classified as belonging to the one or more pre-defined disaster classes, wherein plurality of named entities comprise a geolocation, a severity, a disaster type, and a timeline; and
      determining (204d), by processing the extracted plurality of named entities, a first severity information for the disaster event;

   generating (206), via the one or more hardware processors, a second severity information of the disaster event, by processing the image data using a fine-tuned Visual Language Model (VLM); and
   generating (208), via the one or more hardware processors, a combined severity information for the disaster event, by performing a decision level fusion of the first severity information and the second severity information, wherein the combined severity information represents a predicted severity of the disaster event.

2.   The processor implemented method as claimed in claim 1, wherein a geospatial disaster map of a geographical area affected by the disaster event is generated by processing the input text data, the associated image data, and the combined severity information, wherein in the geospatial disaster map, an intensity of the disaster event is represented using a tally of distribution function.

3.   The processor implemented method as claimed in claim 2, wherein a heat-flow map of the geographical area is generated by integrating the combined severity information generated by processing the input text data and the associated image, from a plurality of data sources, over a period of time, and wherein the heat-flow map of the geographical area represents a disaster occurrence probability at the geographical area and a direction of propagation of the disaster event.

4.   A system (100), comprising:

   one or more hardware processors (102);
   a communication interface (112); and
   a memory (104) storing a plurality of instructions, wherein the plurality of instructions cause the one or more hardware processors to:

      receive an input text data and associated image data;
      process the input text data, by:

         identifying, via a trained Large Language Model (LLM), one or more disaster related information in the input text data, based on a contextual data extracted from the input text data;
         classifying, by processing the one or more disaster related information as a multi-class classification problem, via the LLM, the one or more disaster related information as belonging to one or more pre-defined disaster classes;

extracting a plurality of named entities from the one or more disaster related information classified as belonging to the one or more pre-defined disaster classes, wherein plurality of named entities comprise a geolocation, a severity, a disaster type, and a timeline; and

determining, by processing the extracted plurality of named entities, a first severity information for the disaster event;

generate a second severity information of the disaster event, by processing the image data using a fine-tuned Visual Language Model (VLM); and

generate a combined severity information for the disaster event, by performing a decision level fusion of the first severity information and the second severity information, wherein the combined severity information represents a predicted severity of the disaster event.

5. The system as claimed in claim 4, wherein the one or more hardware processors are configured to generate a geospatial disaster map of a geographical area affected by the disaster event by processing the input text data, the associated image data, and the combined severity information, wherein in the geospatial disaster map, an intensity of the disaster event is represented using a tally of distribution function.

6. The system as claimed in claim 5, wherein the one or more hardware processors are configured to generate a heat-flow map of the geographical area by integrating the combined severity information generated by processing the input text data and the associated image, from a plurality of data sources, over a period of time, and wherein the heat-flow map of the geographical area represents a disaster occurrence probability at the geographical area.

7. One or more non-transitory machine-readable information storage mediums comprising one or more instructions which when executed by one or more hardware processors cause:

receiving an input text data and associated image data;
processing the input text data, by:

identifying, via a trained Large Language Model (LLM), one or more disaster related information in the input text data, based on a contextual data extracted from the input text data;

classifying, by processing the one or more disaster related information as a multi-class classification problem, via the LLM, the one or more disaster related information as belonging to one or more pre-defined disaster classes;

extracting a plurality of named entities from the one or more disaster related information classified as belonging to the one or more pre-defined disaster classes, wherein plurality of named entities comprise a geolocation, a severity, a disaster type, and a timeline; and

determining, by processing the extracted plurality of named entities, a first severity information for the disaster event;

generating a second severity information of the disaster event, by processing the image data using a fine-tuned Visual Language Model (VLM); and

generating a combined severity information for the disaster event, by performing a decision level fusion of the first severity information and the second severity information, wherein the combined severity information represents a predicted severity of the disaster event.

8. The one or more non-transitory machine-readable information storage mediums as claimed in claim 7, wherein the one or more hardware processors are configured to generate a geospatial disaster map of a geographical area affected by the disaster event by processing the input text data, the associated image data, and the combined severity information, wherein in the geospatial disaster map, an intensity of the disaster event is represented using a tally of distribution function.

9. The one or more non-transitory machine-readable information storage mediums as claimed in claim 8, wherein the one or more hardware processors are configured to generate a heat-flow map of the geographical area by integrating the combined severity information generated by processing the input text data and the associated image, from a plurality of data sources, over a period of time, and wherein the heat-flow map of the geographical area represents a disaster occurrence probability at the geographical area.

100

MEMORY 104

MODULES 106

REPOSITORY 110

108

I/O INTERFACE 112

HARDWARE PROCESSORS 102

FIG. 1

receiving, via one or more hardware processors, an input text data and associated image data _202

processing, via the one or more hardware processors, the input text data, comprising: _204

identifying, via a trained Large Language Model (LLM), one or more disaster related information in the input text data, based on a contextual data extracted from the input text data _204a

classifying, by processing the one or more disaster related information as a multi-class classification problem, via the LLM, the one or more disaster related information as belonging to one or more pre-defined disaster classes _204b

extracting a plurality of named entities from the one or more disaster related information classified as belonging to the one or more pre-defined disaster classes, wherein plurality of named entities comprise a geolocation, a severity, a disaster type, and a timeline _204c

determining, by processing the extracted plurality of named entities, a first severity information for the disaster event _204d

generating, via the one or more hardware processors, a second severity information of the disaster event, by processing the image data using a fine-tuned Visual Language Model (VLM) _206

generating, via the one or more hardware processors, a combined severity information for the disaster event, by performing a decision level fusion of the first severity information and the second severity information, wherein the combined severity information represents a predicted severity of the disaster event _208

200

FIG. 2

| | Europäisches Patentamt European Patent Office Office européen des brevets | **EUROPEAN SEARCH REPORT** | **Application Number** EP 25 22 2323 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EL-NISS AYOUB ET AL: "Multimodal Fusion for Disaster Event Classification on Social Media: A Deep Federated Learning Approach", PROCEEDINGS OF THE 2023 6TH INTERNATIONAL CONFERENCE ON E-BUSINESS, INFORMATION MANAGEMENT AND COMPUTER SCIENCE ACMPUB27, NEW YORK, NY, USA, 21 December 2023 (2023-12-21), pages 758-763, XP098794786, DOI: 10.1145/3644713.3644840 ISBN: 9798400709036 * the whole document * | 1-9 | INV. G06F40/30 G06F40/295 G06F40/216 G06F40/35 G08B21/00 |
| A | STEFANOPOULOS DIMITRIOS ET AL: "Fire Detection for Emergency Responders using X", 2024 INTERNATIONAL CONFERENCE ON CONTENT-BASED MULTIMEDIA INDEXING (CBMI) IEEE, 18 September 2024 (2024-09-18), pages 1-7, XP034822284, DOI: 10.1109/CBMI62980.2024.10858873 [retrieved on 2025-02-04] * the whole document * | 1,4,7 | |
| A | HONORI UDO ET AL: "Image Captioners Sometimes Tell More Than Images They See", ARXIV.ORG CORNELL UNIVERSITY LIBRARY, 201 OLIN LIBRARY CORNELL UNIVERSITY ITHACA, NY 14853, 4 May 2023 (2023-05-04), XP091501711, * the whole document * | 1,4,7 | |

TECHNICAL FIELDS SEARCHED (IPC)

G06F
G08B

-/--

The present search report has been drawn up for all claims

| Place of search | Date of completion of the search | Examiner |
|---|---|---|
| Berlin | 20 May 2026 | Stauch, Marc |

Europäisches
Patentamt

European
Patent Office

Office européen
des brevets

**EUROPEAN SEARCH REPORT**

Application Number

EP 25 22 2323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KALLURI KARTHEEK: "Emerging Patterns in Multi-Modal LLMS: Integrating Text, Vision and Context for Advanced Decision-Making", JOURNAL OF ARTIFICIAL INTELLIGENCE, MACHINE LEARNING AND DATA SCIENCE, [Online] vol. 2, no. 2, 20 May 2024 (2024-05-20), pages 1938-1945, XP093399736, ISSN: 2583-9888, DOI: 10.51219/jaimld/kartheek-kalluri/427 Retrieved from the Internet: URL:https://urfpublishers.com/journal/artificial-intelligence/open-access/emerging-patterns-in-multi-modal-llms-integrating-text-vision-and-context-for-advanced-decision-making.pdf> [retrieved on 2026-05-12] * section 2 * | 1,4,7 | |

-----

TECHNICAL FIELDS
SEARCHED      (IPC)

The present search report has been drawn up for all claims

| Place of search | Date of completion of the search | Examiner |
|---|---|---|
| Berlin | 20 May 2026 | Stauch, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202521005597